# FASCICULE DE BREVET EUROPEEN

(11) **EP 0 508 880 B1**
(45) Date de publication et mention de la délivrance du brevet: **14.09.1994**
(21) Numéro de dépôt: 92400963.2
(22) Date de dépôt: 07.04.1992
(51) Int. Cl.: H01S 3/06, H01S 3/094

(54) **Amplificateur optique à fibre optique dopée à l'erbium**
Erbium dotierter faseroptischer optischer Verstärker
Erbium doped fibre optic optical amplifier

(30) Priorité: 08.04.1991 FR 9104252
(43) Date de publication de la demande: 14.10.1992
(73) Titulaire: ALCATEL N.V., NL-1077 XX Amsterdam (NL)
(72) Inventeur: Auge, Jacques, F-91530 Saint Cheron (FR); Chesnoy, José, F-75014 Paris (FR); Fevrier, Hervé, F-91300 Massy (FR); Marcerou, Jean-François, F-91080 Courcouronnes (FR)
(74) Mandataire: Laroche, Danièle

(56) Documents cités:
- EP-A- 0 358 401
- DE-A- 4 005 867
- ELECTRONICS LETTERS. vol. 27, no. 3, 31 Janvier 1991, STEVENAGE GB pages 211 - 213; W.I. WAY ET AL.: 'High gain limiting erbium-doped fibre amplifier with over 30 dB dynamic range'
- TECHNICAL DIGEST ON OPTICAL AMPLIFIERS AND THEIR APPLICATIONS 1990, WASHINGTON, D.C., US pages 68 - 71; J.F. MARCEROU ET AL.: 'Erbium-doped fibers improvement for optical amplifier modules. (Paper MD 7)'
- OPTICAL FIBER COMMUNICATION CONFERENCE. 1990 TECHNICAL DIGEST SERIES vol. 1, 22 Janvier 1990, WASHINGTON D.C., US pages 190 - 191; E. DESURVIRE ET AL.: 'Recent advances in erbium doped fiber amplifiers at 1.5 mum (Paper FA1)'

## Description

La présente invention concerne un amplificateur optique à fibre optique dopée à l'erbium, trouvant notamment une application dans les systèmes de télécommunications à fibre optique.

La particularité d'un tel amplificateur réside dans l'obtention de gains élevés par simple passage du signal dans le domaine spectral 1,5 à 1,6 µm, pour des puissances de pompage optique réduites, de l'ordre de 1 à 100 mwatts.

La stabilité du processus d'amplification dans une fibre est entre autres liée aux bruits modaux de la pompe optique. Il est donc préférable que l'amplificateur fonctionne suivant un schéma de principe dans lequel la pompe optique et le signal à amplifier sont monomodes, la longueur d'onde de coupure du mode LP₁₁ de la fibre amplificatrice étant ainsi inférieure à la longueur d'onde de la pompe. Cela restreint les longueurs d'ondes de pompe aux deux domaines spectraux 0,98 ± 0,04 µm et 1,48 ± 0,04 µm.

Les amplificateurs optiques à fibre optique dopée à l'erbium sont décrits en particulier dans les articles suivants :
[1] R.J. LAMING, D.N. PAYNE, F. MELI, G. GRASSO, E.J. TARBOX, "Technical Digest on Optical Amplifiers and their Applications" -Optical Society of America - Washington, D.C, 1990 - Paper MB3.
[2] J.F. MARCEROU, H. FEVRIER, J. AUGE, C. CLERGEAUD, S. LANDAIS, A.M. BRIANCON, B. JACQUIER, "Technical Digest on Optical Amplifiers and their Applications" - Optical Society of America - Washington D-C, 1990 Paper MD7.
[3] W.I. WAY, A.C. VON LEHMAN, M.J. ANDRESCO, M.A. SAIFI, C.LIN, Technical Digest on Optical Amplifiers and their Applications" Optical Society of America - Washington, D-C, 1990 Paper TU B3.

D'après les articles [1] et [2] , on peut obtenir un rendement quantique supérieur à 80%, que l'on utilise l'un ou l'autre des domaines spectraux précités pour la longueur d'onde de pompe.

Il en est tout autrement si l'on se réfère au rendement de l'amplificateur défini comme le rapport de la puissance du signal en sortie diminuée de la puissance du signal à l'entrée sur la puissance de pompe. Ainsi ce rendement est d'environ 50% pour un pompage vers 0,98 µm et d'environ 80% pour un pompage vers 1,48 µm. Ceci vient du rapport des énergies respectives des photons à la longueur d'onde de pompe et à celle du signal. Donc, pour une puissance de pompe donnée, on sait qu'il est possible d'extraire davantage d'énergie d'un amplificateur à fibre optique dopée à l'erbium lorsque qu'il est pompé à 1,48 µm que lorsqu'il est pompé à 0,98 µm.

Par ailleurs il est connu par les articles [2] et [3] précités, que le bruit apporté par l'amplificateur optique est plus faible lorsqu'il est pompé à 0,98 µm que lorsqu'il est pompé à 1,48 µm ; or le bruit est un paramètre très critique dans certaines applications, comme l'amplification de signaux analogiques.

La présente invention a pour but de réaliser un amplificateur à fibre optique dopée à l'erbium dont la puissance de sortie soit la plus élevée possible et dont le bruit soit le plus faible possible.

La présente invention a pour objet un amplificateur optique à fibre optique dopée à l'erbium, appliqué notamment à l'amplification de signaux dans le domaine spectral compris entre 1,5 et 1,6 µm, comprenant des moyens de pompage optique, caractérisé par le fait que lesdits moyens de pompage optique comportent au moins une première source émettant à une longueur d'onde comprise dans le domaine spectral 0,98 ± 0,04 µm et au moins une seconde source émettant à une longueur d'onde comprise dans le domaine spectral 1,48 ± 0,04 µm.

Selon un premier mode de réalisation ladite première et ladite seconde sources sont reliées par l'intermédiaire de multiplexeurs à fibres, respectivement à l'entrée et à la sortie dudit amplificateur, les énergies de pompe correspondantes se propageant en sens opposés au sein de ladite fibre optique dopée à l'erbium.

Selon un autre mode de réalisation ladite première et ladite seconde sources sont reliées par l'intermédiaire de multiplexeurs à fibres respectivement à la sortie et à l'entrée dudit amplificateur, les énergies de pompe correspondantes se propageant en sens opposés au sein de ladite fibre optique dopée à l'erbium.

Selon un autre mode de réalisation lesdits moyens de pompage optique comportent une première et une seconde sources reliées par des multiplexeurs à l'entrée dudit amplificateur.

Ledit amplificateur peut comporter en outre une première et une seconde sources reliées par des multiplexeurs à la sortie dudit amplificateur.

Quelle que soit la configuration de l'amplificateur selon l'invention, on constate que l'on obtient de manière surprenante, pour des signaux du domaine spectral 1,5 µm à 1,6 µm un compromis très avantageux entre puissance de sortie et bruit.

D'autres caractéristiques et avantages de la présente invention apparaîtront au cours de la description suivante de modes de réalisation donnés à titre illustratif mais nullement limitatif. Dans le dessin annexé :
- les figures 1 à 3 montrent trois variantes d'amplificateurs optiques selon l'invention avec leurs sources de pompage,
- la figure 4 montre les variations du gain G (dB) de l'amplificateur selon l'invention et de deux amplificateurs de l'art antérieur en fonction du signal d'entrée Sᵢₙ,
- la figure 5 montre les variations du facteur de bruit NF (dB) de l'amplificateur selon l'invention et de deux amplificateurs de l'art antérieur en fonction du signal d'entrée Sᵢₙ.

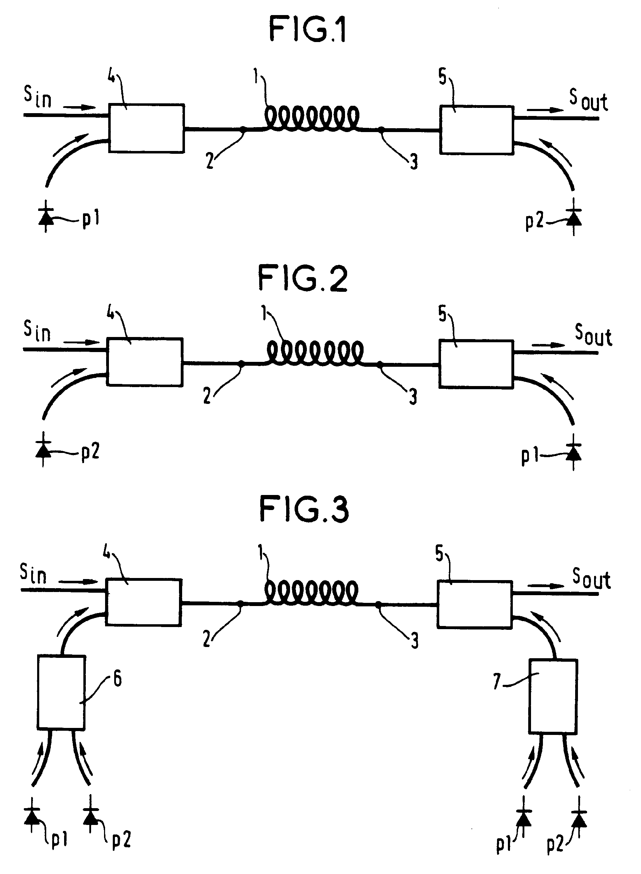

Dans les figures 1 à 3 on a représenté très schématiquement un amplificateur optique 1 à fibre optique dopée à l'erbium dont l'entrée et la sortie sont respectivement référencées 1 et 3 ; Sᵢₙ est le signal d'entrée à 1,532 µm et Sₒᵤₜ est le signal de sortie. Les sources de pompage optique sont des diodes laser émettant à environ 0,98 µm (pour p₁) et à environ 1,48 µm (pour p₂).

La fibre optique dopée à l'erbium a les caractéristiques suivantes :
- matrice vitreuse de coeur à base de silice dopée par Al₂O₃, GeO₂ et dopée en outre à l'erbium.
- rayon de coeur : 1,34 µm.
- écart d'indice entre la gaine et le coeur Δ n = 28,5 x 10⁻³.
- longueur correspondant à la puissance de sortie maximale.

Dans la configuration de la figure 1 on introduit dans la fibre dopée l'énergie de p₁ et l'énergie p₂ au niveau de son entrée 2 et de sa sortie 3 par l'intermédiaire de multiplexeurs 4 et 5.

Dans la configuration de la figure 2, les dispositions de p₁ et p₂ sont inversées par rapport à celles de la configuration de la figure 1.

Dans la configuration de la figure 3 deux sources p₁ et p₂ sont reliées par des multiplexeurs 4,6 et 5,7 à l'entrée et à la sortie de l'amplificateur 1.

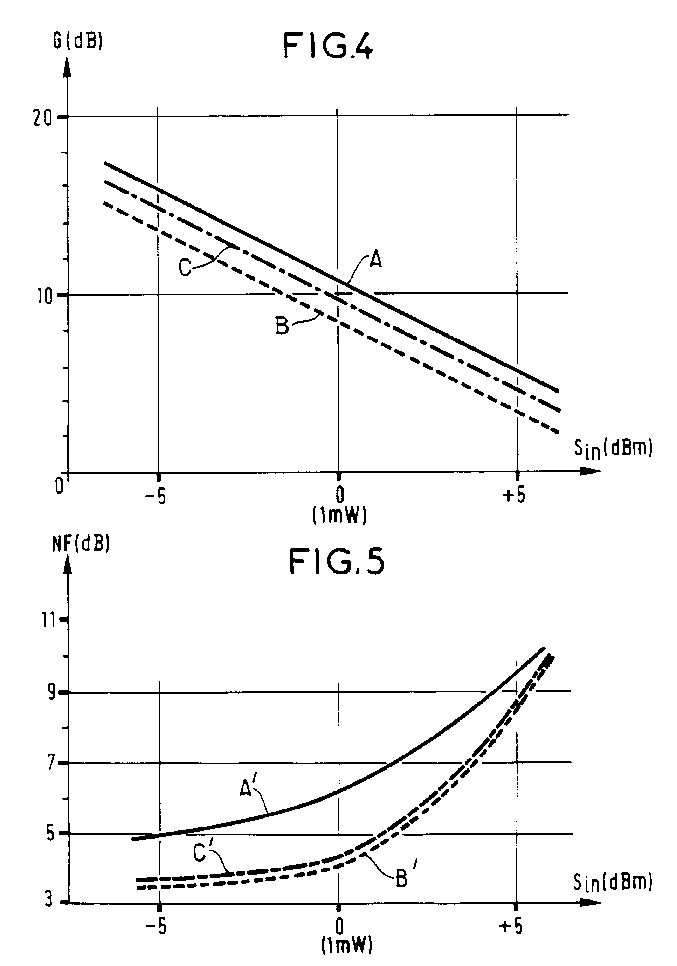

Dans la figure 4, on voit l'évolution du gain G (dB) de trois amplificateurs à fibre dopée à l'erbium en fonction d'un signal d'entrée Sᵢₙ dont la puissance varie autour de 1mW (signal fort). Le signal Sᵢₙ est exprimé en dBm, le point 0 correspondant à 1mW.

La courbe A correspond à un amplificateur de l'art antérieur avec une diode laser délivrant une puissance de pompe de 15 mW à 1,48 µm.

La courbe B correspond à un amplificateur de l'art antérieur avec une diode laser délivrant une puissance de pompe de 15 mW à 0,98 µm.

La courbe C correspond à un amplificateur selon l'invention (configuration de la figure 1) avec une diode p₁ émettant 7,5 mW à 0,98 µm et une diode p₂ émettant 7,5 mW à 1,48 µm.

Les courbes A′, B′, C′ de la figure 5 montrent les niveaux de bruit NF (dB) des trois amplificateurs précédents.

Ces résultats montrent que l'amplificateur selon l'invention possède un facteur de bruit nettement plus faible qu'un amplificateur pompé à 1,48 µm, et presque équivalent à celui d'un amplificateur pompé à 0,98 µm. Par contre son gain d'amplification est supérieur à celui de ce dernier.

Bien entendu l'invention n'est pas limitée aux modes de réalisation qui viennent d'être décrits.

## Revendications

1. Amplificateur optique à fibre optique dopée à l'erbium, appliqué notamment à l'amplification de signaux dans le domaine spectral compris entre 1,5 et 1,6 µm, comprenant des moyens de pompage optique, caractérisé par le fait que lesdits moyens de pompage optique comportent au moins une première source (p₁) émettant à une longueur d'onde comprise dans le domaine spectral 0,98 ± 0,04 µm et au moins une seconde source (p₂) émettant à une longueur d'onde comprise dans le domaine spectral 1,48 ± 0,04 µm.

2. Amplificateur optique selon la revendication 1, caractérisé par le fait que ladite première et ladite seconde sources sont reliées par l'intermédiaire de multiplexeurs à fibres (4, 5) respectivement à l'entrée (2) et à la sortie (3) dudit amplificateur (1), les énergies de pompe correspondantes se propageant en sens opposés au sein de ladite fibre optique dopée à l'erbium.

3. Amplificateur optique selon la revendication 1, caractérisé par le fait que ladite première et ladite seconde sources sont reliées par l'intermédiaire de multiplexeurs à fibres (5, 4) respectivement à la sortie (3) et à l'entrée (2) dudit amplificateur, les énergies de pompe correspondantes se propageant en sens opposés au sein de ladite fibre optique dopée à l'erbium.

4. Amplificateur optique selon la revendication 1, caractérisé par le fait que lesdits moyens de pompage optique comportent une première et une seconde sources reliées par des multiplexeurs (4, 6) à l'entrée (2) dudit amplificateur (1).

5. Amplificateur optique selon la revendication 4, caractérisé par le fait que lesdits moyens de pompage optique comportent en outre une première et une seconde sources (5, 7) reliées par des multiplexeurs à la sortie (3) dudit amplificateur (1).

6. Amplificateur optique selon l'une des revendications précédentes, caractérisé par le fait que la matrice vitreuse du coeur de la fibre optique dopée à l'erbium contient du germanium et de l'aluminium.

## Patentansprüche

1. Optischer Verstärker mit einer Lichtleitfaser, die mit Erbium dotiert ist, insbesondere für die Verstärkung von Signalen im Spektralbereich zwischen 1,5 und 1,6 µm, wobei der Verstärker optische Pumpmittel enthält, dadurch gekennzeichnet, daß die optischen Pumpmittel mindestens eine erste Quelle (p₁), die bei einer Wellenlänge im Spektralbereich von 0,98 ±0,04 µm Licht aussendet, und mindestens eine zweite Quelle (p₂) aufweisen, die bei einer Wellenlänge im Spektralbereich von 1,48 ± 0,04 µm Licht aussendet.

2. Optischer Verstärker nach Anspruch 1, dadurch gekennzeichnet, daß die erste und die zweite Quelle über LichtleiterMultiplexer (4, 5) an den Eingang (2) bzw. den Ausgang (3) des Verstärkers (1) angeschlossen sind, wobei die entsprechenden Pumpenergien sich in entgegengesetzten Richtungen durch die mit Erbium dotierte Lichtleitfaser fortpflanzen.

3. Optischer Verstärker nach Anspruch 1, dadurch gekennzeichnet, daß die erste und die zweite Quelle über LichtleiterMultiplexer (5, 4) an den Ausgang (3) bzw. den Eingang (2) des Verstärkers angeschlossen sind, wobei die entsprechenden Pumpenergien sich in entgegengesetzten Richtungen in der mit Erbium dotierten Lichtleitfaser fortpflanzen.

4. Optischer Verstärker nach Anspruch 1, dadurch gekennzeichnet, daß die optischen Pumpmittel eine erste und eine zweite Quelle aufweisen, die über Multiplexer (4, 6) an den Eingang (2) des Verstärkers (1) angeschlossen sind.

5. Optischer Verstärker nach Anspruch 4, dadurch gekennzeichnet, daß die optischen Pumpmittel weiter eine erste und eine zweite Quelle aufweisen, die über Multiplexer (6, 7) an den Ausgang (3) des Verstärkers (1) angeschlossen sind.

6. Optischer Verstärker nach einem der vorhergehenden Ansprüche, dadurch gekennzeichnet, daß die glasartige Matrix des Kerns der mit Erbium dotierten Lichtleitfaser Germanium und Aluminium enthält.

## Claims

1. An erbium-doped optical fiber optical amplifier applied, in particular, to amplifying signals in the spectrum range 1.5 µm to 1.6 µm, the amplifier including optical pumping means and being characterized by the fact that said optical pumping means include at least a first source (P₁) emitting at a wavelength lying in the spectrum range 0.98 ± 0.04 µm, and at least one second source (P₂) emitting at a wavelength lying in the spectrum range 1.48 ± 0.04 µm.

2. An optical amplifier according to claim 1, characterized by the fact that said first and said second light sources are connected via fiber multiplexers (4, 5) respectively to the input (2) and to the output (3) of said amplifier (1), the corresponding pumping energies propagating in opposite directions within said erbium-doped optical fiber.

3. An optical amplifier according to claim 1, characterized by the fact that said first and said second light sources are connected via fiber multiplexers (5, 4) respectively to the output (3) and to the input (2) of said amplifier, the corresponding pumping energies propagating in opposite directions within said erbium-doped optical fiber.

4. An optical amplifier according to claim 1, characterized by the fact that said optical pumping means include a first source and a second source connected by multiplexers (4, 6) to the input (2) of said amplifier (1).

5. An optical amplifier according to claim 4, characterized by the fact that said optical pumping means further include a first source and a second source (5, 7) connected by multiplexers to the output (3) of said amplifier (1).

6. An optical amplifier according to any preceding claim, characterized by the fact that the vitreous matrix of the core of the erbium-doped optical fiber contains germanium and aluminum.
